(19) Europäisches Patentamt
European Patent Office
Office européen des brevets

(11) **EP 3 528 596 B1**

(12) **EUROPEAN PATENT SPECIFICATION**

(45) Date of publication and mention
of the grant of the patent:
**22.07.2020 Bulletin 2020/30**

(51) Int Cl.:
*H05B 6/36* *(2006.01)*          *B29C 33/06* *(2006.01)*

(21) Application number: **19156770.0**

(22) Date of filing: **12.02.2019**

(54) **INDUCTOR FOR THE PREHEATING OF MOLDS**

INDUKTOR ZUR VORWÄRMUNG VON FORMEN

INDUCTEUR DE PRÉCHAUFFAGE DE MOULES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.02.2018 IT 201800002739**

(43) Date of publication of application:
**21.08.2019 Bulletin 2019/34**

(73) Proprietor: **Atos S.P.A.
20122 Milano (IT)**

(72) Inventors:
• **MESCHIA, Maurilio
14100 Asti (IT)**
• **CARRESE, Gennaro
1DTO, 4710-043 Freguesia de Gualtar, Concelho
de
Braga (PT)**
• **MILELLA, Gregorio
10093 Collegno (Torino) (IT)**

(74) Representative: **Petruzziello, Aldo
Racheli S.r.l.
Viale San Michele del Carso, 4
20144 Milano (IT)**

(56) References cited:
**EP-A1- 2 199 057      DE-A1-102009 006 375
GB-A- 2 059 320       US-A- 4 439 492**

# Description

The present invention relates to an inductor for an electromagnetic induction heating system suitable for being used for preheating and heating molds already installed on a plant or on a production machine.

## State of art

Many production processes use molds that must be kept at a temperature above the ambient temperature for correct operation during the production process.

Examples of processes that require the use of molds maintained at temperature are injection or compression molding of rubber, injection or compression molding of thermosetting materials, injection or compression molding of silicone and injection molding of some technical thermoplastic materials. The molds can be mounted both on vertical presses and horizontal presses.

Mold temperatures can range from 80 °C - 100 °C for thermoplastic materials, up to 150 °C - 180 °C for rubber and between 150 °C - 200 °C for thermosetting materials and silicone rubbers.

Although reference is made in particular to molds for thermoplastic, thermosetting materials and silicone rubbers, the solution proposed by the present invention can also be applied to molds for other materials, such as steel and the like.

Currently the means used to heat the molds are divided into two categories:

- fluid;
- electric resistors.

Said heating systems are also used to preheat the mold in the phase preceding the start of production.

Fluid heating systems use diathermic oil, pressurized water or steam as thermo-carrier fluid. The fluid heated by suitable control units is circulated in a closed circuit in channels formed inside the mold. The mold is connected to the control units by means of a series of flexible pipes.

Electric resistance heating systems are substantially of two types:

- with resistors embedded in the mold;
- with heating planes.

In the case of heating with resistors embedded in the mold, the resistors usually of cylindrical type are housed in holes formed in the mold and electrically connected to the machine's command and control system.

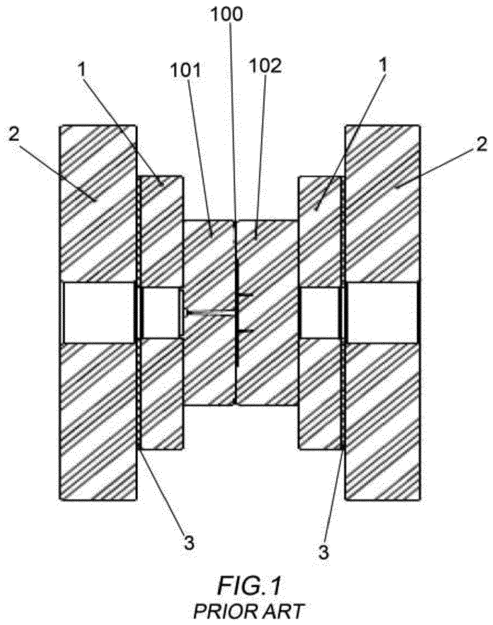

In the case of heating by means of heating planes, the heating is of an indirect type and is carried out by conduction from the heating planes on which the mold is fixed. The heating planes are normally heated by electrical resistances embedded in them. In Figure 1, by way of explanation, a mold 100 is seen fixed to two heating planes 1 which in turn are fixed to the planes 2 of the press and thermally insulated therefrom by means of insulation plates 3. Each heating plane 1 is equipped with electric heating resistances (not shown in Fig. 1) The mold 100 is equipped with one or more thermocouples (also not shown in Fig. 1) to check their temperature. In some cases the heating planes are also magnetic planes and also perform the magnetic fixing function of the mold; in this case the fixing of the mold to the planes does not require fixing elements, such as screws or brackets.

An additional element to consider when assessing the effectiveness of a heating system is the time required for preheating before production starts. For safety reasons, the mold 100 is loaded onto the production machine at a low temperature, usually the ambient temperature, and is subsequently heated by the means used during the molding process to keep it at temperature. This phase is particularly important and significant for the evaluation of the use of the machine in production in cases where many mold changes are planned with relatively small production batches.

The fluid heating systems are very effective and guarantee excellent control of the mold temperature, the main advantages of this system are:

- possibility to install a high power reducing the times to reach the working temperature and the start of production;
- good temperature control thanks to the possibility of positioning the heating near the mold cavity.

On the other hand, fluid heating systems have some drawbacks:

- high cost of heating units;
- high cost of the molds;
- solution not usable in the case of very common thin molds in the case of rubber molding;
- longer times for installing the mold in the machine, due to the need to connect the thermo-carrier fluid supply system;
- maintenance costs of the mold;
- increase in risk factors associated with the type of heating (high temperature pressure fluids).

These factors limit the use only to cases where it is strictly necessary to use this type of heating.

The mold heating system with embedded heating resistors has the following advantages:

- simplicity of the solution compared to the fluid solution;
- lower cost of the heating unit;
- lower cost of the mold.

On the other hand, heating systems with heating elements embedded in the mold have some drawbacks:

- low power installed;
- long time to reach the working temperature and production start-up;
- solution not usable for very common thin molds in the case of rubber molding;
- low reliability due to the difficulty of ensuring good thermal contact between the resistance and the mold wall;
- difficulty in housing the heating elements in the mold.

These factors limit the use of this solution.

The indirect heating system using heating planes has the following advantages:

- simplicity of the system;
- simplicity of the mold (no channel or embedded resistance);
- reduced mold installation times in the machine;
- high reliability;
- preferred solution in the case of small-thickness molds.

On the other hand, the system has these drawbacks:

- indirect heating;
- long times to reach the working temperature and production start-up.

As an alternative to resistive or fluid heating systems, electromagnetic induction heating systems have also been developed and patented, with which the heat is generated directly in the mold to be heated. The solution of the electromagnetic induction heating systems according to the prior art provides for: one or more solenoid coils or flat coils housed inside the mold to be heated and crossed by oscillating currents fed by one or more generators. The international application WO 96/29188 is an example of heating application of a mold by electromagnetic induction. This solution has the advantage of allowing:

- high heating rates during the start-up phase;
- good regulation of the mold temperature in the production phase.

On the other hand, the solution has the drawback of a high cost of the mold and moreover the electromagnetic induction coil cannot always be produced in the mold.

As an alternative to the solution integrated in the mold, indirect induction heating solutions have also been developed by housing the coils in the mold support plates. In this case, it is the indirect heating solution with the same advantages and disadvantages and with higher costs for the equipment compared to heating with electrical resistors.

The most widespread solution of molds that require heating, in particular for the production of rubber products or thermosetting materials, involves the use of heating planes.

Figure 1 is a sectional side view of a mold 100 consisting of two parts 101 and 102 in contact with each other in the molding phase and which can be opened for the extraction of the molded piece. Said mold 100 is installed on heating planes 1 equipped with resistive heaters. In this case the molds are particularly simple and are the minimum dimensions possible to contain the impression or the impressions of the parts to be produced and to have the necessary mechanical resistance. In particular, for these molds 100 it is tried to minimize the thickness in order to reduce the thermal path from the heating plates towards the center. The electric resistances are housed inside the heating planes 1. This solution guarantees constructive simplicity and reliability for the mold 100, but has the disadvantage of requiring a long preheating time for the start of the production, since the heat diffuses from the heating planes 1 towards the center of the mold 100. Furthermore, since, for reasons of safety for operators, the heated planes 1 cannot be kept in temperature before installing the mold in the machine, the preheating time lengthens due to heating not only the mass of the mold 100 but also the mass of the heating planes 1, which in many cases is equal to or greater than the mass of the mold.

Finally, a portion of the heating power available on the heating surfaces 1 is lost through the thermal insulation 3 which separates the heating planes 1 from the planes of the press 2.

As a first approximation, the time constant of the heating phenomenon through heating planes is given by the following expression:

$$\tau = (\rho * c_p * b^2) / (k * \pi^2) \qquad [s]$$

where:

$\rho$ - density of the material in the mold expressed in [kg/m3]
$c_p$ - specific heat of the material in the mold expressed in [J/(kg°C)]
k - thermal conductivity of the material in the mold expressed in [W/ (m°C)]
b - thickness of the mold (distance between the heating planes) expressed in [m]

*Example 1:* Steel mold with total thickness b = 0.2 [m], we obtain for the time constant:

$$\tau = 990 \qquad [s]$$

*Example 2*: Steel mold with total thickness b = 0.4 [m], we obtain for the time constant:

$$\tau = 3970 \qquad [s]$$

From these two examples we can see how the diffusion of heat from the heating planes towards the center of the mold is strongly determined by the diffusion distance.

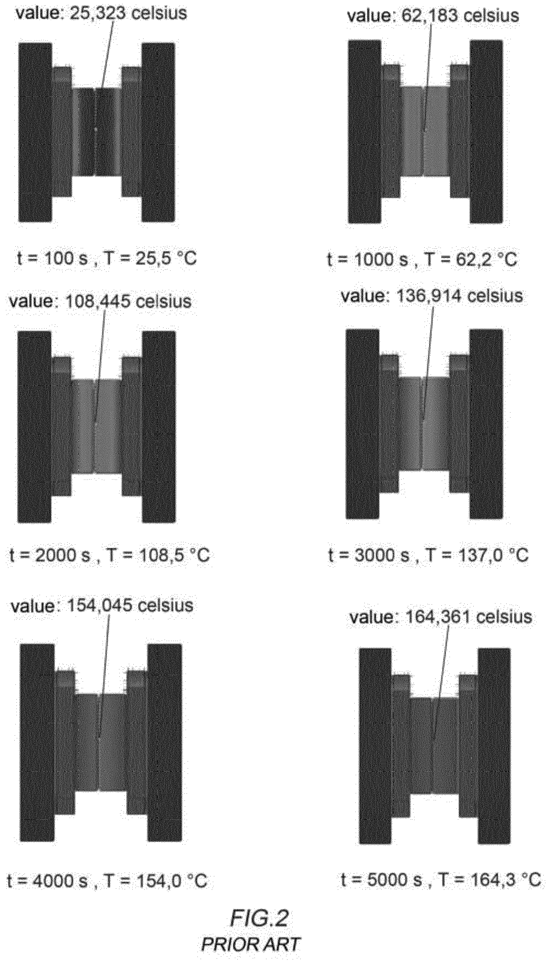

Figure 2, by way of example, shows the simulation of the heat diffusion thermal transient in a mold having a total thickness of 275 mm, initially at a temperature of 25 °C and with heating plates held at 180 °C. After 3000 seconds, the temperature of the mold at the center has reached a temperature of only 137 °C, to reach a temperature of the mold in the central part equal to 90% of the temperature of the heating plates it takes about 5000 seconds.

EP 2199057 A1 **relates to a coaxial cooling/heating coil structure and a mold configured with the same, in which the coaxial cooling/heating coil is comprised of: a cooling channel having an inlet, provided for a cooling water to flow therein, and an outlet, provided for discharging the cooling water therefrom; and a heat-conducting coil, disposed inside the cooling channel. The coaxial cooling/heating structure is fitted to a mold to be used for enhancing the preheating efficiency of the mold while improving the time required for cooling the mold.**

US 4439492 A **and** DE 1002009 006375 A **disclose inductors for heating molds, to be arranged between the two parts of the mold. However, such inductors have a structure that is not protected when it is accommodated between the two parts of the mold and does not allow to obtain an acceptable preheating time of the mold.**

**Object of the invention**

The object of the invention is to eliminate the drawbacks and problems of the prior art of heating the mold by means of heating planes illustrated above.

In particular, an object of the invention is to provide an inductor solution suitable for the electromagnetic induction preheating of the molds and of the relative modality of installation on the mold and of its use, capable of generating an electromagnetic field which penetrates into the mold, in in such a way that the induced currents generate a production of heat directly in the mold to be heated.

Another object of the invention is to provide a solution which, by integrating the heating from the planes, is able to significantly reduce the preheating time of the molds.

Another object of the invention is to preserve all the advantages of the heating solution through the heating planes, combining the undoubted advantage of accelerating the mold preheating step.

These objects are achieved by the inductor for electromagnetic induction heating according to the invention which presents the characteristics of the appended independent claim 1.

Advantageous embodiments of the invention appear from the dependent claims.

Substantially, the inductor for the electromagnetic induction preheating according to the invention, to be arranged between the two parts of a mold, comprises an outer frame made of non-conductive and non-magnetic material and an internal assembly, consisting of at least one coil, made of an electrical conductor, in the form of a spiral or a winding, arranged coplanar between two support and thermal insulating elements made of semi-flexible, non-conductive and non-magnetic material, wherein the winding axis of the coil is perpendicular to the main plane of the inductor so as to generate, crossed by an alternating electric current, an electromagnetic field transverse to the main plane of the inductor, such that the lines of the magnetic induction field, produced by the coil, come out from the surface of one of the two parts of the mold through the inductor inside the coil, enter the second part of the mold and then come out again through the inductor on outside the coil, and close inside the first part of the mold.

**Brief description of the figures**

Further characteristics of the invention will be made clearer by the detailed description that follows, referring to a purely exemplary and therefore non-limiting embodiment thereof, shown in the appended drawings, in which:

- Figure 1 is a sectional side view of a mold installed on heating planes equipped with resistive heaters, according to the prior art;
- Figure 2 is an illustration of the thermal transient of a preheated mold by means of resistive heating plates;
- Figure 3 is a partial sectional side view of the reference structure of the inductor according to the invention;
- Figure 4 is a side view of a mold installed on heating planes, with an inductor according to the invention interposed between the two parts of the mold;
- Fig. 5 is a detail of the sectional side view, in which the positioning of the inductor frame with respect to the two parts of the mold is shown;
- Fig. 6 is a sectional view illustrating the pattern of the magnetic induction field lines in the two parts of the mold due to the currents circulating in the inductor coil;
- Figure 7 is an illustration of the thermal transient of a preheated mold using heating plates and induction preheating units according to the invention;

- Figure 8 shows the graph A of the temperature as a function of the preheating time in the area close to contact with the heating plate and in the central zone for the preheating system with only heating plates, and the graph B of the temperature as a function of the preheating time for the system with heating plates and inductor interposed between the two parts of the mold;
- Figure 9 shows a derivative version of an inductor provided with a central hole, inside the coil to make room for possible elements which protrude from one of the two parts of the mold, outside the split plane of the mold, and enter into cavity of the corresponding part of the mold.

**Description of preferred embodiments**

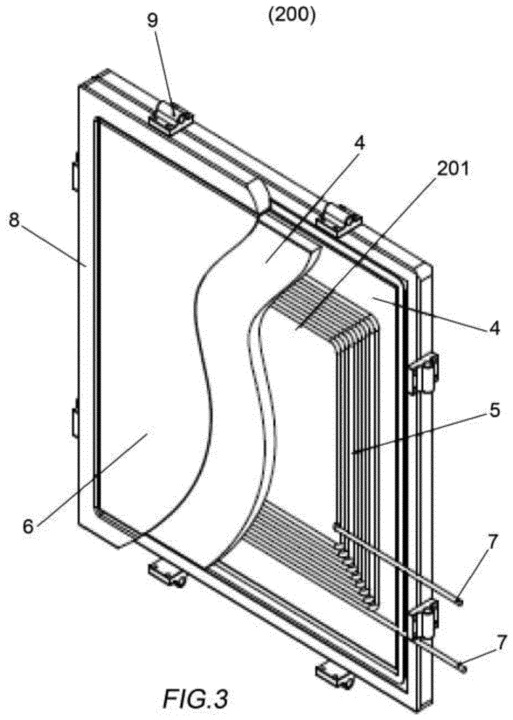

With reference to the accompanying figures, and for now in particular to Figure 3, an inductor for the electromagnetic induction heating according to the present invention is shown in partial section, in its basic structure common to all the different configurations, indicated globally by the reference number (200).

The inductor (200) for electromagnetic induction heating consists of an inner assembly 201 and an outer frame 8. The assembly 201 is substantially constituted by two support and insulation elements 4 made of non-magnetic, non-conductive and semi-flexible material, by a coil 5, made with an electric conductor, arranged between the supports 4 and wound so as to generate an electromagnetic field transverse to the main plane of the inductor. Said coil 5 is provided with two electric terminals 7 for connecting the inductor, by means of suitable cables, to an alternating current generator not shown in the figure. The assembly of supports 4 and coil 5 is inserted inside a non-conductive and non-magnetic casing in preferably flexible material 6 resistant to temperature made of ceramic fibers or glass fibers or other heat-resistant material, the function of which is that of to contain the assembly. The outer frame 8 of non-conductive and non-magnetic material having a thickness greater than the thickness of the assembly has the function of:

- support the internal element 201,
- forming a protective spacer to the internal element 201, in order to avoid crushing of the coil.

The frame 8 on the outer periphery is provided with hooking points 9 for fixing the inductor (200) to the mold to be preheated.

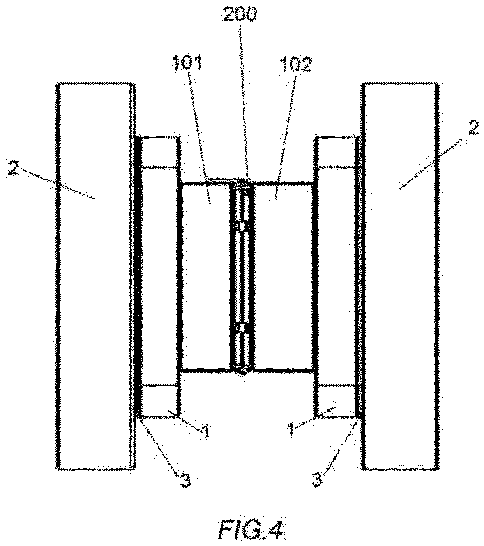

Figure 4 is a schematic representation of the mode of installation of the inductor (200) in the mold (100) for carrying out the preheating. The inductor (200) is placed between the two parts of the mold 101 and 102 fixed to the respective heating planes 1 and spaced from each other by a portion equal to or slightly higher than the thickness of the frame 8 of the inductor (200).

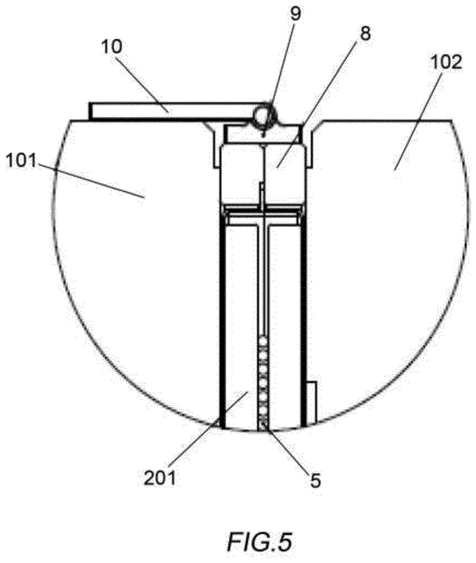

Figure 5 is a detail of the sectional side view, in which the positioning of the inductor frame with respect to the two parts of the mold is shown. The function of the mold frame 8 is to allow the two parts of the mold 101 and 102 to be brought together without crushing the inner element 201 of the inductor housing the electromagnetic induction coil 5. The hooking points 9 of the inductors are fixed to one of the parts of the mold by means of appropriate support elements 10 designed according to the characteristics of the mold. In Figure 5, only by way of example is shown a support element 10 in the form of a lever hooked to the upper part of the half-mold 101 of a vertical mold, to which the inductor assembly must remain constrained only for the preheating time.

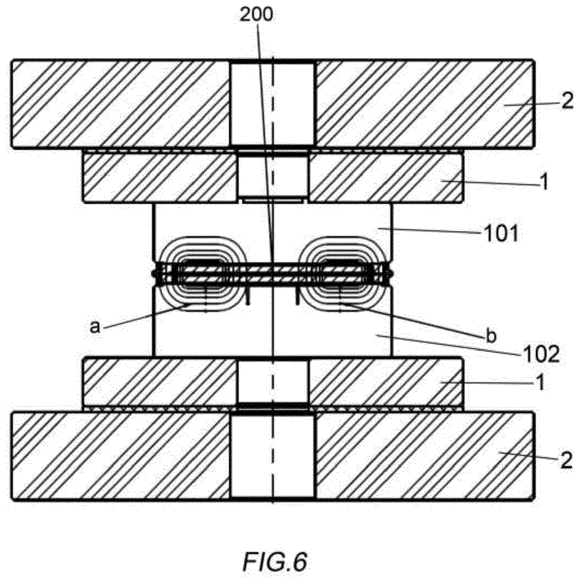

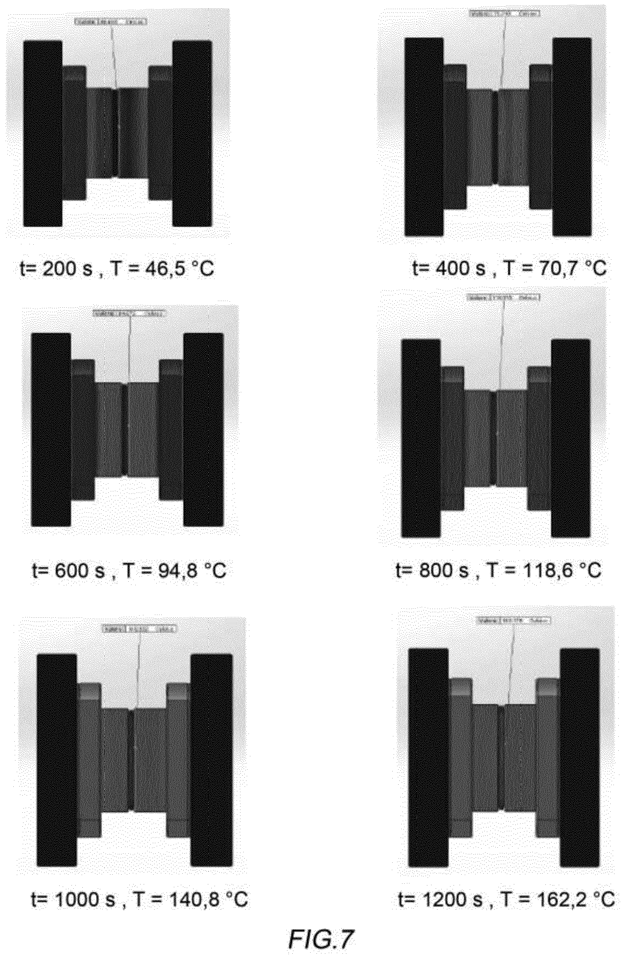

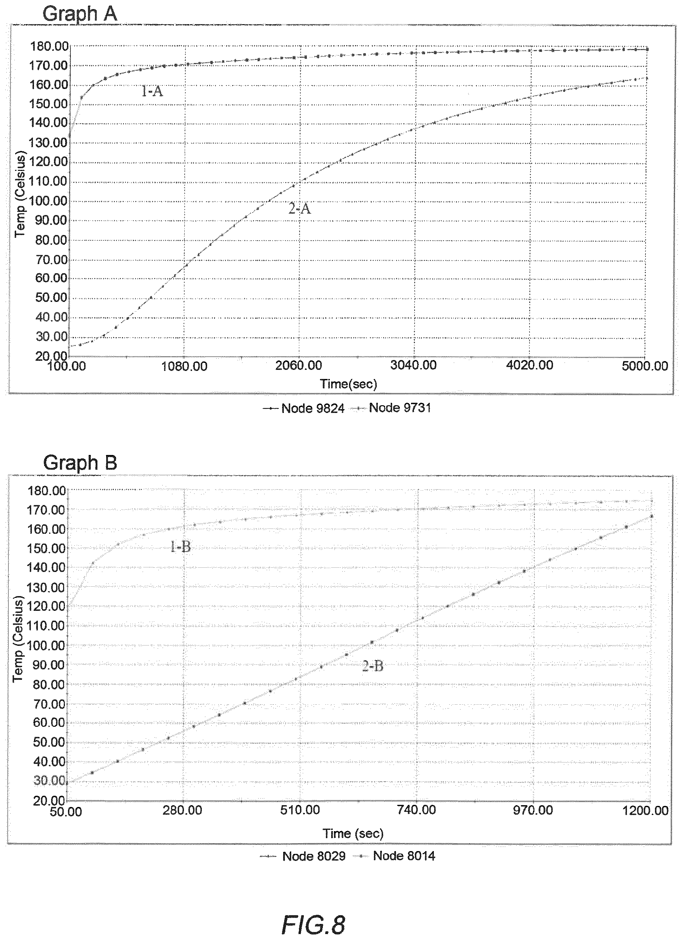

Figure 6 shows in the section of the mold the qualitative pattern of the lines of the magnetic induction field (a) and (b). This installation configuration allows to induce an electromagnetic field of the same size in both parts 101 and 102 of the mold and consequently, being conductive, to generate identical parasitic currents in the two parts of the mold. The eddy currents due to the resistive effect generate identical thermal power in the two parts of the mold. This configuration of the inductor installation between the two mold parts makes it possible to generate thermal power in a central area away from the support surfaces of the mold to the heating surfaces without requiring contact between the inductor and the surface of the mold. The substantial advantage of this heating configuration is clearly visible in Figures 7 and 8.

Figure 7 shows the simulation of the heat diffusion thermal transient in the same mold of Figure 2, initially at a temperature of 25 °C and with heating plates held at 180 °C, with interposed between the two parts of the mold 101 and 102 the inductor (200) according to the present invention supplied with an alternating current such as to generate a heating power of 3.2 W/cm$^2$ on each of the two faces of the mold. After 1000 seconds, the temperature of the mold in the center has already reached a temperature of 141 °C, which in the case of heating with only heating plates was reached after more than 3000 seconds; to reach a temperature of the mold in the central part equal to 90% of the temperature of the heating plates, it takes about 1200 seconds against the approximately 5000 seconds necessary for the configuration of only heating plates.

Figure 8 shows the graph A of the temperature as a function of the preheating time in the area close to the contact with the heating plate and in the central zone for the preheating system with only heating plates and graph B of the temperature as a function of the preheating time for the system with heating plates and inductor interposed between the two parts of the mold. The curves 1-A and 1-B represent the temperature pattern in the mold near the heating plates, while the curves 2-A and 2-B represent the temperature pattern in the central area of the mold. The time pattern of curve 2-A is typical of a conductive phenomenon determined by the conductivity of the material alone, while the time pattern of curve 2-B is almost linear and is typical of a heating phenomenon associated with a constant thermal power. In the case of heating with an inductor interposed between the two parts of the mold it is possible to vary the preheating speed by varying the specific power (W/cm$^2$) injected by the induction heating system.

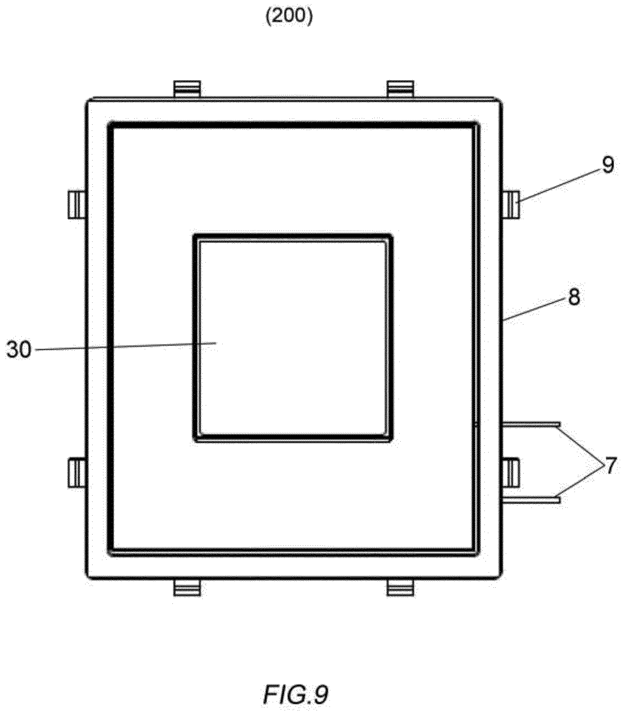

Figure 9 shows a derivative solution of an inductor (200) according to the present invention in which the internal element 201 has a hole 30 inside the coil 5 to leave room for possible elements that protrude from one of the two parts of the mold, outside the split plane of the mold, and enter the cavity of the corresponding part of the mold.

Naturally, the invention is not limited to the particular embodiments previously described and illustrated in the accompanying drawings, but numerous detail modifications can be made to it, within the reach of a person skilled in the art, falling within the scope of the invention defined by the attached claims.

**Claims**

1. Inductor (200) for electromagnetic induction preheating of molds, to be arranged between the two parts (101, 102) of a mold, comprising an internal assembly (201), consisting of at least one coil (5), made of an electrical conductor, in the form of a spiral or a winding, wherein the winding axis of the coil (5) is perpendicular to the main plane of the inductor so as to generate, crossed by an alternating electric current, an electromagnetic field transverse to the main plane of the inductor, **characterized in that** said at least one coil (5) is arranged coplanar between two support and thermally insulating elements (4) made of semi-flexible, non-conductive and non-magnetic material, and is enclosed in an outer frame (8) made of non-conductive and non-magnetic material.

2. Inductor (200) for the electromagnetic induction preheating of molds according to claim 1, wherein the outer frame (8) has a thickness greater than the thickness of the internal assembly (201) so that, when the inductor is mounted on a mold, the frame comes into contact with the two parts (101, 102) of the mold, so as to protect the inner member from being crushed.

3. Inductor (200) for the electromagnetic induction preheating of molds according to claim 1, further comprising an outer casing (6) made of flexible, insulating and non-magnetic material, for closing and protecting the assembly (201) consisting of the two support and insulation elements (4) and the coil (5).

4. Inductor (200) for electromagnetic induction preheating of molds according to claim 3, wherein said casing (6) is made of a glass fiber or ceramic fiber fabric.

5. Inductor (200) for the electromagnetic induction preheating of molds according to any one of the previous claims, wherein said frame (8) on the outer periphery is provided with attachment points (9) for fixing the inductor (200) to the mold to be preheated by means of support elements (10).

6. Inductor (200) for electromagnetic induction preheating of molds according to any one of the previous claims, wherein said frame (8) completely or on two opposite sides surrounds said inner assembly (201).

7. Inductor (200) for electromagnetic induction preheating of molds according to any one of the previous claims, wherein said inner assembly (201) has a central hole (30), in the region in which the coil (5) is not present.

**Patentansprüche**

1. Induktor (200) zur Vorwärmung von Formen mittels elektromagnetischer Induktion, der zwischen den zwei Teilen (101, 102) einer Form anzuordnen ist, umfassend eine Innenanordnung (201) bestehend aus mindestens einer Spule (5), die aus einem elektrischen Leiter in Form einer Spirale oder einer Wicklung hergestellt ist, wobei die Wicklungsachse der Spule (5) senkrecht zur Hauptebene des Induktors verläuft, um, von einem wechselnden elektrischen Strom gekreuzt, ein elektromagnetisches Feld quer zur Hauptebene des Induktors zu erzeugen, **dadurch gekennzeichnet, dass** die mindestens eine Spule (5) komplanar zwischen zwei Trag- und wärmeisolierenden Elementen (4) angeordnet ist, die aus halbflexiblem, nicht leitendem und nichtmagnetischem Material hergestellt sind, und in einen Außenrahmen (8) eingefasst ist, der aus nicht leitendem und nichtmagnetischem Material hergestellt ist.

2. Induktor (200) zur Vorwärmung von Formen mittels elektromagnetischer Induktion nach Anspruch 1, wobei der Außenrahmen (8) eine Dicke aufweist, die größer als die Dicke der Innenanordnung (201) ist, so dass, wenn der Induktor auf einer Form angebracht ist, der Rahmen mit den zwei Teilen (101, 102) der Form in Kontakt tritt, um das innere Element davor zu schützen, zerdrückt zu werden.

3. Induktor (200) zur Vorwärmung von Formen mittels elektromagnetischer Induktion nach Anspruch 1, ferner umfassend ein Außengehäuse (6) aus flexiblem, isolierendem und nichtmagnetischem Material zum Verschließen und Schützen der Anordnung (201), die aus den zwei Trag- und Isolationselementen (4) und der Spule (5) besteht.

4. Induktor (200) zur Vorwärmung von Formen mittels elektromagnetischer Induktion nach Anspruch 3, wobei das Gehäuse (6) aus einem Glasfaser- oder Keramikfasergewebe hergestellt ist.

5. Induktor (200) zur Vorwärmung von Formen mittels elektromagnetischer Induktion nach einem der vorhergehenden Ansprüche, wobei der Rahmen (8) auf dem Außenumfang mit Anbringungspunkten (9) zur Befestigung des Induktors (200) an der Form, die vorgewärmt werden soll, mittels Tragelementen (10) versehen ist.

6. Induktor (200) zur Vorwärmung von Formen nach einem der vorhergehenden Ansprüche, wobei der Rahmen (8) die Innenanordnung (201) vollständig oder auf zwei gegenüberliegenden Seiten umgibt.

7. Induktor (200) zur Vorwärmung von Formen nach einem der vorhergehenden Ansprüche, wobei die Innenanordnung (201) in dem Bereich, in dem die Spule (5) nicht vorhanden ist, ein Mittelloch (30) aufweist.

## Revendications

1. Inducteur (200) de préchauffage par induction électromagnétique de moules, à agencer entre les deux parties (101, 102) d'un moule, comprenant un assemblage interne (201), consistant en au moins une bobine (5) constituée d'un conducteur électrique sous forme d'une spirale ou d'un enroulement, dans lequel l'axe d'enroulement de la bobine (5) est perpendiculaire au plan principal de l'inducteur de manière à générer, traversé par un courant électrique alternatif, un champ électromagnétique transversal au plan principal de l'inducteur,
**caractérisé en ce qu'**au moins une bobine (5) est agencée de manière coplanaire entre deux éléments de support et d'isolation thermique (4) constitués d'un matériau semi-flexible, non conducteur et non magnétique, et est enfermée dans un châssis externe (8) constitué d'un matériau non conducteur et non magnétique.

2. Inducteur (200) pour le préchauffage par induction électromagnétique de moules selon la revendication 1, dans lequel le châssis externe (8) présente une épaisseur supérieure à l'épaisseur de l'assemblage interne (201) de telle sorte que, quand l'inducteur est monté sur un moule, le châssis vient en contact avec les deux parties (101, 102) du moule, de manière à éviter que l'élément interne soit écrasé.

3. Inducteur (200) pour le préchauffage par induction électromagnétique de moules selon la revendication 1, comprenant en outre un boîtier externe (6) constitué d'un matériau flexible, isolant et non magnétique, pour fermer et protéger l'assemblage (201) consistant en les deux éléments de support et d'isolation (4) et la bobine (5).

4. Inducteur (200) pour le préchauffage par induction électromagnétique de moules selon la revendication 3, dans lequel ledit boîtier (6) est constitué d'un tissu en fibre de verre ou en fibre de céramique.

5. Inducteur (200) pour le préchauffage par induction électromagnétique de moules selon l'une quelconque des revendications précédentes, dans lequel ledit châssis (8) sur la périphérie externe est pourvu de points d'attache (9) pour fixer l'inducteur (200) au moule à préchauffer au moyen d'éléments de support (10).

6. Inducteur (200) pour le préchauffage par induction électromagnétique de moules selon l'une quelconque des revendications précédentes, dans lequel ledit châssis (8) entoure ledit assemblage interne (201) complètement ou sur deux côtés opposés.

7. Inducteur (200) pour le préchauffage par induction électromagnétique de moules selon l'une quelconque des revendications précédentes, dans lequel ledit assemblage interne (201) comporte un trou central (30) dans la région dans laquelle la bobine (5) n'est pas présente.

**FIG.1**
PRIOR ART

FIG.2
PRIOR ART

(200)

FIG.3

FIG.4

FIG.5

*FIG.6*

t= 200 s , T = 46,5 °C

t= 400 s , T = 70,7 °C

t= 600 s , T = 94,8 °C

t= 800 s , T = 118,6 °C

t= 1000 s , T = 140,8 °C

t= 1200 s , T = 162,2 °C

FIG.7

FIG.8

(200)

*FIG.9*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 9629188 A
- EP 2199057 A1
- US 4439492 A
- DE 1002009006375 A